# EUROPÄISCHE PATENTANMELDUNG

(11) **EP 4 803 571 A1**
(43) Veröffentlichungstag der Anmeldung: **09.09.2026**
(21) Anmeldenummer: 25162112.4
(22) Anmeldetag: 06.03.2025
(51) Int. Cl.: C08K 5/42, C08K 5/435, C08K 5/5415, C08L 69/00

(54) **FLAMMWIDRIGE POLYCARBONATZUSAMMENSETZUNG**

(71) Anmelder: Covestro Deutschland AG, 51373 Leverkusen (DE)
(72) Erfinder: Heuer, Helmut Werner, 57074 Siegen (DE); Kaiser, Christian, 47918 Tönisvorst (DE)
(74) Vertreter: Levpat

(57) **Zusammenfassung**

Die vorliegende Erfindung betrifft eine Zusammensetzung, enthaltend verzweigtes Polycarbonat und ein fluorfreies Flammschutzmittel, die sich durch eine Flammschutz-Klassifikation nach UL94 von V-0 bei einer Schichtdicke von 3,0 mm, bevorzugt 2,4 mm auszeichnet, sowie einen Formkörper enthaltend diese Zusammensetzung.

## Beschreibung

Die vorliegende Erfindung betrifft eine Polycarbonatzusammensetzung, die auch ohne Einsatz von halogenhaltigen Flammschutzmitteln eine gute Flammwidrigkeit aufweist, sowie Formkörper enthaltend die Zusammensetzung.

Polycarbonatzusammensetzungen genießen breite Anwendungsmöglichkeiten. Sie müssen jedoch häufig insbesondere für dünnwandige Anwendungen zusätzlich mit Flammschutzmitteln additiviert werden, um die hohen Anforderungen an Flammschutzeigenschaften erfüllen zu können. Dabei stehen die Reduktion der Menge oder sogar Verbannung unterschiedlicher Flammschutzmittel immer wieder im Fokus, da je nach chemischer Natur der Flammschutzmittel diese als "besonders besorgniserregende Stoffe" (sogenannte *substances of very high cancern,* SVHC) eingestuft werden. Beispielsweise können halogenierte Flammschutzmittel unter Hitzeeinwirkung unerwünschte Halogenradikale und daraus resultierende Folgeprodukte freisetzen, die schädlich für die Umwelt sind. In vielen Ländern dieser Welt wird daher eine Verwendung solcher Flammschutzmittel vermieden. Ein gängiges Flammschutzmittel in Polycarbonatzusammensetzungen ist Kaliumperfluorbutansulfonat (auch Rimarsalz oder C4-Salz genannt). Einige PFAS (poly- und perfluorierte Alkylsubstanzen) gelten unter der europäischen Chemikalienverordnung REACH bereits als besonders besorgniserregende Stoffe, da sie sehr langlebig sind, sich in Organismen anreichern (Bioakkumulation) und für Menschen schädlich sein können. Für besonders besorgniserregende Stoffe gelten im Rahmen der REACH-Verordnung besondere Auskunftspflichten und es kann eine Zulassungspflicht entstehen, d. h. nur explizit zugelassene Verwendungen dürfen weiter genutzt werden.

Das Umweltbundesamt UBA hält derzeit, insbesondere unter Berücksichtigung des Vorsorgeprinzips, eine Regulierung der gesamten Stoffgruppe für notwendig, denn alle PFAS könnten für lange Zeiträume in der Umwelt verbleiben. Daher erarbeitet das UBA mit anderen Behörden aus Deutschland, den Niederlanden, Dänemark, Schweden und Norwegen einen EU-weiten Beschränkungsvorschlag unter REACH für diese Stoffgruppe.

Die European Chemicals Agency (ECHA) hat nun die Verbindung "Perfluorobutane sulfonic acid (PFBS) und seine Salze" auf die REACH Kandidaten-Liste der SVHC-Substanzen gesetzt. Damit ist auch das C4-Salz betroffen. Für lange Zeit wurde diese Verbindung zur reproduzierbar guten Flammwidrigkeitsverbesserung von Polycarbonatzusammensetzungen eingesetzt. Die Bereitstellung von Polycarbonatzusammensetzungen mit vergleichbarer Flammwidrigkeit aber unter Verwendung fluorfreier Flammschutzmittel stellt daher eine große Herausforderung dar.

Die WO2003/050176 A1 betrifft transluzente flammwidrige Polycarbonatzusammensetzungen, welche ohne den Einsatz von chlorierten oder bromierten Flammschutzmitteln eine gute Flammwidrigkeit aufweisen und dabei eine hohe Transparenz und eine niedrige Trübung aufweisen. Es wird dabei eine Zusammensetzung offenbart, die ein verzweigtes Polycarbonat, Polytetrafluorethylen (PTFE) und ein Flammschutzmittel frei von Chlor und Brom umfasst. Wie in den Vergleichsbeispielen gezeigt, kann ohne das PTFE kein ausreichender Flammschutz erreicht werden.

In der WO2022/243222 A1 wird eine Zusammensetzung beschrieben, die lineares und verzweigtes Polycarbonat, optional eine Verstärkungsfaser, weniger als 1000 ppm eines Flammschutzmittels und ein siloxanhaltigen Flammschutzsynergisten enthält.

Die WO2012/065039 A1 betrifft eine Zusammensetzung aus einem Flammschutzmittel und einem verzweigtem Polycarbonat, wobei als Flammschutzmittel C4-Salz eingesetzt wird.

Die EP2638105 A1 offenbart Zusammensetzungen enthaltend ein Flammschutzmittel und ein verzweigtes Polycarbonat mit hoher Viskosität.

Ausgehend von diesem Stand der Technik bestand die Aufgabe der vorliegenden Erfindung darin, eine Polycarbonat enthaltende Zusammensetzung bereitzustellen, die frei von halogenierten Flammschutzmitteln und -synergisten ist und dabei gleichzeitig mindestens eine Flammwidrigkeit aufweist, welche der UL94 Klassifikation von V-0 bei 3,0 mm, bevorzugt bei 2,4 mm entspricht. Bevorzugt weist die Zusammensetzung weiterhin eine Transmission nach ASTM E 1164-12 von mehr als 85 % bei einer Schichtdicke von 2 mm, besonders bevorzugt bei einer Schichtdicke von 3 mm auf. Weiterhin bevorzugt weist die Zusammensetzung einen Yellowness-Index nach ASTM E 3 13von <3 bei einer Schichtdicke von 3 mm auf, besonders bevorzugt <2,5 bei einer Schichtdicke von 2 mm. Ganz besonders bevorzugt weißt die Zusammensetzung eine Trübung nach ASTM D1003 (Prozedur A) von <1,5 % bei einer Verarbeitungstemperatur von 300 °C und einer Schichtdicke von 3 mm auf.

Die Zusammensetzung sollte auch die Möglichkeit eröffnen, dass eine Verarbeitung sowohl mittels Spritzguss als auch Extrusion zum Einsatz kommen kann (dual use).

Überraschend wurde gefunden, dass eine Kombination aus verzweigtem Polycarbonat, welches einen speziellen Verzweigungsgrad aufweist, und einer speziellen Menge an einer Verbindung, ausgewählt aus der Gruppe bestehend aus Alkali-, Erdalkali- oder Ammoniumsalzen aliphatischer oder aromatischer Sulfonsäure-, Sulfonamid- oder Sulfonimidderivate und Kombinationen aus diesen zu einer Flammwidrigkeit führt, welche mindestens einer UL94-Klassifikation von V-0 bei 3,0 mm, bevorzugt 2,4 mm entspricht. Die erfindungsgemäße Zusammensetzung verzichtet auf den Einsatz einer Verbindung, die auf der SVHC-REACH-Liste der ECHA steht. Dabei ist es überraschend, dass bevorzugt auf weitere Additive zur Polycarbonatzusammensetzung verzichtet werden kann, welche häufig für die Erzielung von hoher Flammwidrigkeit bei dünnen Schichtdicken verwendet werden. Unter anderem weist die Zusammensetzung bevorzugt selbst kein PTFE, kein halogeniertes Flammschutzmittel und/oder auch kein Polysiloxan-Polycarbonat-Blockcokondensat auf.

Kein PTFE bedeutet, dass dies nicht der Zusammensetzung zugegeben wird. Dem Fachmann ist dabei bekannt, dass durch den Einsatz recyclierter Materialien oder Verunreinigungen im Herstellungsprozess der einzelnen Komponenten dennoch in Spuren an PTFE vorhanden sein können. Dementsprechend enthält die Zusammensetzung bevorzugt weniger als 0,1 Gew.-%, besonders bevorzugt weniger 0,01 Gew.-%, ganz besonders bevorzugt enthält sie kein PTFE.

Weiterhin enthält die Zusammensetzung bevorzugt weniger als 0,1 Gew.-%, besonders bevorzugt weniger 0,01 Gew.-%, ganz besonders bevorzugt enthält sie kein halogenhaltiges Flammschutzmittel.

Ebenso enthält die Zusammensetzung bevorzugt weniger als 1 Gew.-%, weiterhin bevorzugt weniger als 0,1 Gew.-%, besonders bevorzugt weniger 0,01 Gew.-%, ganz besonders bevorzugt enthält sie kein Polysiloxan-Polycarbonat-Blockcokondensat.

Erfindungsgemäß wird eine Zusammensetzung bereitgestellt, enthaltend:
(A) ein Polycarbonat mit einem Verzweigungsgrad von 0,8 bis 1,5 mol-%,
(B) 0,10 bis 0,25 Gew.-% einer Verbindung, ausgewählt aus der Gruppe bestehend aus Alkali-, Erdalkali- oder Ammoniumsalzen aliphatischer oder aromatischer Sulfonsäure-, Sulfonamid-, oder Sulfonimidderivate und Kombinationen aus diesen,
wobei sich die Gew.-% auf die gesamte Zusammensetzung beziehen.

Ein weiterer Gegenstand der vorliegenden Erfindung ist ein Formkörper enthaltend die erfindungsgemäße Zusammensetzung. Bevorzugt ist dabei, dass der Formkörper durch Spritzguss oder Extrusion hergestellt wird.

### Komponente A

Verzweigte aromatische Polycarbonate gemäß Komponente A, die nach der Erfindung geeignet sind, sind aus der Literatur bekannt oder können nach bekannten Verfahren aus der Literatur hergestellt werden (zur Herstellung von aromatischen Polycarbonaten siehe beispielsweise Schnell, "Chemie und Physik der Polycarbonate", Interscience Publishers, 1964 und DE-AS 1 495 626, DE-A 2 232 877, DE-A 2 703 376, DE-A 2 714 544, DE-A 3 000 610 und DE-A 3 832 396). Aromatische Polycarbonate werden z. B. durch Reaktion von aromatischen Dihydroxyverbindungen, vorzugsweise Diphenolen, mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren hergestellt, gegebenenfalls unter Verwendung von Kettenabbrechern, beispielsweise Monophenolen. Die für Komponente A der vorliegenden Erfindung charakteristische Verzweigung wird durch Einbeziehung von Verzweigungsmitteln in die Reaktion erreicht, bei denen es sich um Verbindungen mit Funktionalitäten von drei oder mehr handelt, beispielsweise Triphenole oder Tetraphenole. Die Herstellung verzweigter aromatischer Polycarbonate über ein Schmelzumesterungsverfahren durch Reaktion von Diphenolen mit beispielsweise Diphenylcarbonat unter Zugabe von beispielsweise Triphenolen oder Tetraphenolen ist ebenfalls möglich.

Für die Herstellung der Polycarbonate geeignete Dihydroxyarylverbindungen sind beispielsweise Resorcin, Dihydroxydiphenyle, Bis(hydroxyphenyl)alkane, Bis(hydroxyphenyl)cycloalkane, Bis-(hydroxyphenyl)sulfide, Bis(hydroxyphenyl)ether, Bis(hydroxyphenyl)ketone, Bis(hydroxyphenyl)-sulfone, Bis(hydroxyphenyl)sulfoxide, α,α'-Bis(hydroxyphenyl)diisopropylbenzole, Phthalimidine, abgeleitet von Isatin- oder Phenolphthaleinderivaten, sowie deren kernalkylierte und kernarylierte Verbindungen.

Bevorzugte Dihydroxyarylverbindungen sind 4,4'-Dihydroxydiphenyl, 2,2-Bis(4-hydroxyphenyl)-propan (Bisphenol A, BPA), 2,4-Bis(4-hydroxyphenyl)-2-methylbutan, 1,1-Bis(4-hydroxyphenyl)-p-diisopropylbenzol, 2,2-Bis(3-methyl-4-hydroxyphenyl)propan (Dimethyl-Bisphenol A, Bisphenol C), Bis(3,5-dimethyl-4-hydroxyphenyl)methan, 2,2-Bis(3,5-dimethyl-4-hydroxyphenyl)propan, Bis(3,5-dimethyl-4-hydroxyphenyl)sulfon, 2,4-Bis(3,5-dimethyl-4-hydroxyphenyl)-2-methylbutan, 1,1-Bis-(3,5-dimethyl-4-hydroxyphenyl)-p-diisopropylbenzol und 1,1-Bis(4-hydroxyphenyl)-3,3,5-trimethylcyclohexan, 9,9-Bis(4-hydroxyphenyl)fluoren (Bisphenol FL) sowie die Bisphenole (Aa) bis (Ca): 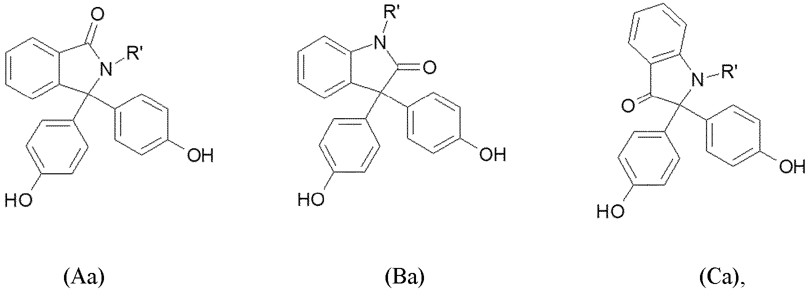 in denen R' jeweils für C1- bis C4-Alkyl, Aralkyl oder Aryl, bevorzugt für Methyl oder Phenyl, ganz besonders bevorzugt für Methyl, steht.

Besonders bevorzugte Bisphenole sind 2,2-Bis(4-hydroxyphenyl)propan (Bisphenol A, BPA), 2,2-Bis(3,5-dimethyl-4-hydroxyphenyl)propan, 1,1-Bis(4-hydroxyphenyl)cyclohexan, 1,1-Bis(4-hydroxyphenyl)-3,3,5-trimethylcyclohexan, 4,4'-Dihydroxydiphenyl und 2,2-Bis(3-methyl-4-hydroxyphenyl)-propan (Dimethyl-Bisphenol A), 9,9-Bis(4-hydroxyphenyl)fluoren (Bisphenol FL) sowie die Bisphenole der Formeln (Aa), (Ba) und (Ca). Ganz besonders bevorzugt ist Bisphenol A.

Diese und weitere geeignete Dihydroxyarylverbindungen sind z. B. in US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

**Im** Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen. Bevorzugt wird jedoch kein Cyanophenol eingesetzt als Kettenabbrecher.

Erfindungsgemäß bevorzugt ist es des Weiteren, dass das verzweigte Polycarbonat A und/oder gegebenenfalls auch das später beschriebene lineare Polycarbonat C Endgruppen der Formel (2a), (2b) und/oder (2c) umfasst: 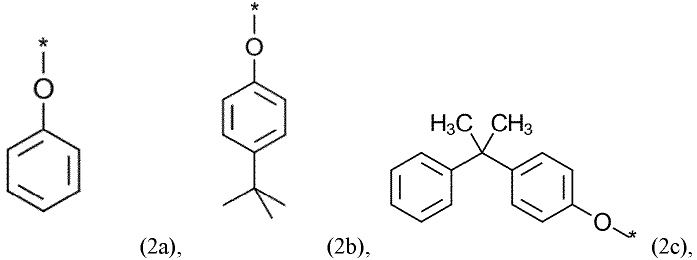 wobei * für die Position steht, mit der die Formeln (2a), (2b) und (2c) das jeweilige Polycarbonat A und/oder C terminieren. Des Weiteren bevorzugt weist das verzweigte Polycarbonat A Endgruppen der Formel (2a) und/oder (2b) auf, insbesondere bevorzugt der Formel (2b).

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Erfindungsgemäß weißt das verzweigte Polycarbonat A einen Verzweigungsgrad von 0,8 bis 1,5 mol-%, bevorzugt 0,9 bis 1,3 mol-%, ganz besonders bevorzugt von 1,00 bis 1,25 mol-%, besonders bevorzugt von 1,1 bis 1,2 mol-% auf.

Gemäß der vorliegenden Erfindung ist der Begriff "verzweigt" so zu verstehen, dass das Polycarbonat mehrere Verzweigungspunkte bzw. einen Verzweigungsgrad aufweist. Dieser Verzweigungsgrad wird in mol.-% angegeben und gemäß der folgenden Formel berechnet: $\begin{matrix}mol . - % \left(Verzweigungsgrad\right) = \\ mol \left(Verzweiger\right) / \left(mol\left(Verzweiger\right)+\left(mol \left(Dihydroxyverbindung\right)\right.\right)\end{matrix}$ wobei der Verzweiger das Verzweigungsmittel ist, welches mindestens drei funktionelle Gruppen aufweist und die Dihydroxyverbindung die zur Herstellung des Polycarbonats eingesetzte Verbindung mit nur zwei funktionellen Gruppen. Beispielsweise wird in den Beispielen als Verzweiger 1,1,1-Tris(4-hydroxyphenyl)ethan (THPE) eingesetzt und die Dihydroxyverbindung ist Bisphenol A (BPA). Dann ergibt sich: $\begin{matrix}mol . - % \left(Verzweigungsgrad\right) = \\ \left(m\left(THPE\right)\left[g\right]/M\left(THPE\right)\left[g/mol\right]\right) / \left(\left(m\left(THPE\right)\left[g\right]/M\left(THPE\right)\left[g/mol\right]\right)+\left(\begin{matrix}m \left(BPA\right) \left[g\right] / \\ M \left(BPA\right) \left[g/mol\right]\end{matrix}\right)\right)\end{matrix}$ wobei M(THPE) = 306 g/mol und M(BPA) = 228 g/mol und m(THPE) und m(BPA) für die Masse der entsprechenden Edukte bei der Herstellung des verzweigten Polycarbonats stehen.

Obwohl die mol-% des Verzweigungsgrads auf Basis der eingesetzten Edukte berechnet wird, bezieht sich erfindungsgemäß der Begriff "Verzweigungsgrad" auf die chemische Struktur des Verzweigers/Verzweigungsmittels, wie sie nach der Reaktion im Polycarbonat vorhanden ist. Dies ist möglich, da mindestens 95% des eingesetzten Verzweigers bei der Herstellung des verzweigten Polycarbonats eingebaut werden. Dabei ist es bevorzugt, dass das Polycarbonat A Verzweigungen aufweist, welche ausgewählt sind aus der Gruppe, bestehend aus den Formel (IIa) bis (IIf) und beliebigen Mischungen davon: 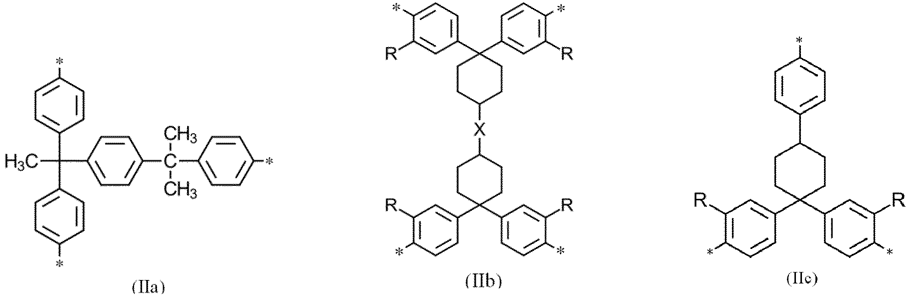 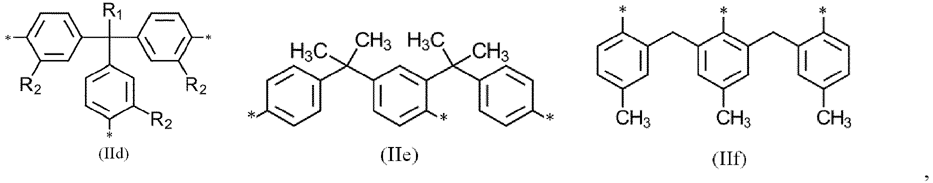 wobei * für die Positionen steht, welche die Verzweigungen mit der Polycarbonatkette verbindet und R jeweils unabhängig voneinander für H und einem Alkyl, bevorzugt H und Methyl steht,
X für ein lineares oder verzweigtes Alkyl oder eine Einfachbindung, bevorzugt C(CH3)₂ oder eine Einfachbindung steht,
R₁ jeweils unabhängig voneinander für H und einem Alkyl, bevorzugt H und Methyl steht und
R₂ jeweils unabhängig voneinander für H und einem Alkyl, bevorzugt H und Methyl steht.

Das verzweigte Polycarbonat A kann eine Art der oben gezeigten Verzweigungen aufweisen oder eine Mischung von zwei oder mehreren Verzweigungen. In einer bevorzugten Ausführungsform weist das Polycarbonat A Verzweigungen der Formel (IId) auf. Dabei ist es insbesondere bevorzugt, dass R₁ und R₂ unabhängig voneinander für H oder Alkyl stehen. Besonders bevorzugt steht R₁ für Methyl und R₂ für H. Eine solche Verzweigungsstruktur resultiert, wenn 1,1,1-Tris(4-hydroxyphenyl)ethan (THPE) als Verzweiger eingesetzt wird.

Der Anteil der Verzweigerstrukturen im verzweigten Polycarbonat A kann mit Verfahren die dem Fachmann bekannt sind bestimmt werden. Bevorzugt erfolgt dies mittels NMR, insbesondere ¹H- oder ¹³C-NMR. Daneben ist auch eine Totalverseifung des verzweigten Polycarbonats A möglich. Das dabei entstehende Monomergemisch kann mittels HPLC aufgetrennt und die Stoffmengenanteile des Verzweigers und der Dihydroxyverbindung bestimmt werden.

Wie bereits oben beschrieben, werden Verzweiger/Verzweigungsmittel bei der Synthese des Polycarbonats A eingesetzt, um den entsprechenden Verzweigungsgrad zu erhalten. Geeignete Verzweiger sind dabei die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri(4-hydroxyphenyl)benzol, 1,1,1-Tri(4-hydroxyphenyl)ethan (THPE), Tri(4-hydroxyphenyl)phenylmethan, 2,4-Bis(4-hydroxyphenylisopropyl)phenol, 2,6-Bis(2-hydroxy-5'-methylbenzyl)-4-methylphenol, 2-(4-Hydroxyphenyl)-2-(2,4-dihydroxyphenyl)-propan, Tetra(4-hydroxyphenyl)methan, Tetra(4-(4-hydroxyphenylisopropyl)phenoxy)methan und 1,4-Bis((4',4"-dihydroxytriphenyl)methyl)benzol und 3,3-Bis(3-methyl-4-hydroxyphenyl)-2-oxo-2,3-dihydroindol.

Insbesondere bevorzugt sind Verzweiger der Formeln (IIIa) bis (IIIf): 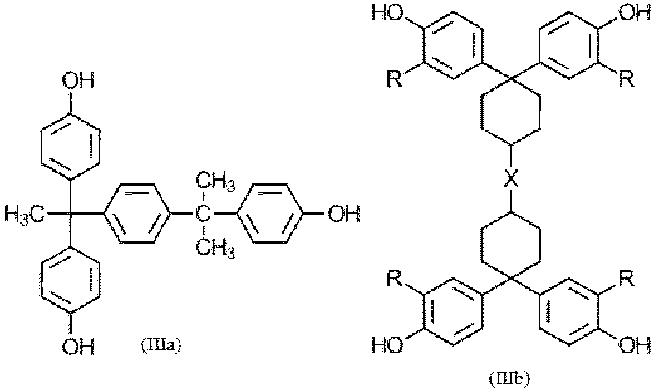 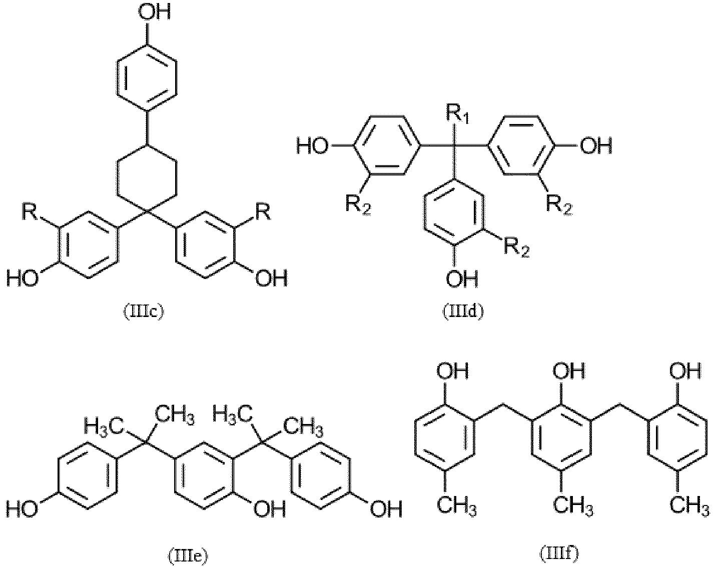 in denen
R jeweils unabhängig voneinander für H und einem Alkyl, bevorzugt H und Methyl steht,
X für ein lineares oder verzweigtes Alkyl oder eine Einfachbindung, bevorzugt C(CH3)₂ oder eine Einfachbindung steht,
R₁ jeweils unabhängig voneinander für H und einem Alkyl, bevorzugt H und Methyl steht und
R₂ jeweils unabhängig voneinander für H und einem Alkyl, bevorzugt H und Methyl steht.

Insbesondere bevorzugt wird ein Verzweiger der Formel (IIId) verwendet. Dabei ist es insbesondere bevorzugt, dass R₁ und R₂ unabhängig voneinander für H oder Alkyl stehen. Besonders bevorzugt steht R₁ für Methyl und R₂ für H.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Die Polycarbonate A weisen bevorzugt gewichtsmittlere Molekulargewichte M_{w} von 15.000 g/mol bis 40.000 g/mol, weiter bevorzugt 18.000 bis 34.000 g/mol, besonders bevorzugt von 22.000 g/mol bis 33.000 g/mol, insbesondere von 23.000 g/mol bis 32.000 g/mol auf, ermittelt durch Gelpermeationschromotographie, kalibriert gegen Bisphenol-A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30 °C. Verwendung einer UV- und/oder RI-Detektion.

Die Schmelzevolumenfließrate (MVR), bestimmt gemäß ISO 1133-1:2012-03 bei 300 °C und 1,2 kg Belastung, beträgt bevorzugt 3 bis 40 cm³/10 min, bevorzugt 4 bis 35 cm³/10 min. Insbesondere weist das Polycarbonat A eine maximale Schmelzeviskostität, gemessen unter Verwendung eines Parallel-Platten-Schmelzrheometers bei einer Heizrate von 10 °C/min und einer Frequenz von 3 rad/s im Temperaturbereich von 350 °C bis 450 °C, von weniger als 700 Pa s, besonders bevorzugt weniger als 500 Pa s, weiterhin besonders bevorzugt von weniger als 300 Pa s, ganz besonders bevorzugt von weniger als 150 Pa s auf.

Erfindungsgemäß umfasst die Zusammensetzung bevorzugt 25 bis 99,7 Gew.-% der Komponente A, weiter bevorzugt 55 bis 98,7 Gew.-%, besonders bevorzugt 75 bis 97,7 Gew.-%, ganz besonders bevorzugt 85 bis 96,7 Gew.-%.

### Komponente B

Die erfindungsgemäße Zusammensetzung umfasst des Weiteren als Komponente B eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen.

Es versteht sich, dass es sich auch um eine Kombination aus zwei oder mehr solcher Flammschutzmittel handeln kann. Ebenso versteht sich, dass es sich dabei auch um zwei oder mehrere Vertreter einer der genannten Verbindungsgruppen handeln kann.

Unter "Derivaten" werden erfindungsgemäß an dieser und anderer Stelle solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/ Atomgruppen entfernt wurden. Die Stammverbindung ist somit noch weiterhin erkennbar.

Besonders bevorzugt umfassen erfindungsgemäße Zusammensetzungen als Flammschutzmittel ein oder mehrere Verbindungen, ausgewählt aus der Gruppe, bestehend Natrium- oder Kaliumdiphenylsulfonsulfonat, Dinatrium- oder Dikalium-3,3'-sulfonylbis(benzolsulfonat), Natrium- oder Kalium-2-formylbenzolsulfonat, Natrium- oder Kalium-(N-benzolsulfonyl)benzolsulfonamid oder deren Mischungen.

Bevorzugt werden Natrium- oder Kaliumdiphenylsulfonsulfonat, Dinatrium- oder Dikalium-3,3'-sulfonylbis(benzolsulfonat) oder deren Mischungen eingesetzt. Des Weiteren bevorzugt ist ein Gemisch aus Kaliumdiphenylsulfonsulfonat und Dikalium-3,3'-sulfonylbis(benzolsulfonat). Ganz besonders bevorzugt ist ein Gemisch, das Kaliumdiphenylsulfonsulfonat (B1) und Dikalium-3,3'-sulfonyl-bis(benzolsulfonat) (B2) in einem Verhältnis B1 : B2 von 80 : 20 bis 50 : 50, bevorzugt im Verhältnis von 75 : 25 bis 66 : 34 enthält.

Die erfindungsgemäßen Zusammensetzungen enthalten dabei 0,10 bis 0,25 Gew.-%, bevorzugt 0,12 bis 0,22 Gew.-%, des Weiteren bevorzugt 0,14 bis 0,20 Gew.-%, besonders bevorzugt 0,16 bis 0,18 Gew.-% der Komponente B.

### Komponente C

Bei der Komponente C handelt es sich bevorzugt um ein lineares aromatisches Polycarbonat. Unter "Polycarbonat" im erfindungsgemäßen Sinne werden sowohl Homopolycarbonate als auch Copolycarbonate verstanden. Erfindungsgemäß können auch Mischungen von Polycarbonaten verwendet werden, wobei dann aber jede der einzelnen Komponenten linear sind.

Das Polycarbonat C kann bevorzugt durch die oben zu Polycarbonat A beschriebenen Wege hergestellt werden.

Besonders bevorzugte Polycarbonate C sind das Homopolycarbonat auf Basis von Bisphenol A, die Copolycarbonate auf Basis von 1,1-Bis(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis(4-hydroxyphenyl)-3,3,5-trimethylcyclohexan, sowie von den Dihydroxyarylverbindungen der Formeln (Aa), (Ba) und (Ca), abgeleitete Homo- oder Copolycarbonate, insbesondere mit Bisphenol A.

Die Polycarbonate C haben bevorzugt gewichtsmittlere Molekulargewichte M_{w} von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol-A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%., Flussrate: 1,0 ml/min, Temperatur der Lösungen: 30 °C. Verwendung einer UV- und/oder RI-Detektion.

Die Schmelzevolumenfließrate (MVR), bestimmt gemäß ISO 1133-1:2012-03 bei 300 °C und 1,2 kg Belastung, beträgt bevorzugt 3 bis 40 cm³/(10 min), weiter bevorzugt 4 bis 35 cm³/(10 min).

Es ist bevorzugt, dass Komponente C, falls vorhanden, in der erfindungsgemäßen Zusammensetzung in Mengen von bis zu 70 Gew.%, bevorzugt bis 40 Gew.-%, besonders bevorzugt bis 20 Gew.-% eingesetzt wird.

### Komponente D

Optional enthält die Zusammensetzung zusätzlich als Komponente D ein cyclisches Siloxan der Formel (R¹₂SiO)_{y} und /oder ein Siloxan, welches eine trifunktionelle Siloxaneinheit der Formel R²SiO_{3/2} umfasst, worin R¹ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise worin R² jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

Besonders bevorzugt handelt es sich bei dem cyclischen Siloxan der Formel (R¹₂SiO)_{y} um Octamethylcyclotetrasiloxan, 1,2,3,4-Tetramethyl-1,2,3,4-tetravinylcyclotetrasiloxan, 1,2,3,4-Tetramethyl-1,2,3,4-tetraphenylcyclotetrasiloxan, Octaethylcyclotetrasiloxan, Octapropylcyclotetrasiloxan, Octabutylcyclotetrasiloxan, Decamethylcyclopentasiloxan, Dodecamethylcyclohexasiloxan, Tetradecamethylcycloheptasiloxan, Hexadecamethylcyclooctasiloxan, Eicosamethylcyclodecasiloxan, Octaphenylcyclotetrasiloxan. Besonders bevorzugt ist dabei Octaphenylcyclotetrasiloxan.

Handelt es sich bei D um ein Siloxan, welches eine trifunktionelle Siloxaneinheit der Formel R²SiO_{3/2} umfasst, ist es bevorzugt, dass dieses Siloxan diese Formel zu mindestens 90 mol.-%, besonders bevorzugt zu mindestens 95 mol.-% und ganz besonders bevorzugt zu 100 mol.-% umfasst, bezogen auf die Gesamtheit der Mole an Siloxaneinheiten (M-Einheit, D-Einheit, T-Einheit, Q-Einheit). Dabei stellt die Formel R²SiO_{3/2} eine T-Einheit dar. Wie dem Fachmann bekannt, stellt eine M-Einheit die Formel R₃SiO_{1/2} dar (worin R Wasserstoff oder eine monovalente organische Gruppe darstellt), D stellt eine bifunktionelle Einheit der Formel R₂SiO dar (worin R Wasserstoff oder eine monovalente organische Gruppe darstellt) und eine Q-Einheit stellt eine tetrafunktionelle Siloxaneinheit der Formel SiO₂ dar.

Diese trifunktionelle Siloxaneinheit der Formel R²SiO_{3/2} ist auch als Polysilsequioxan bekannt. Sie kann neben den T-Einheiten auch M-Einheiten aufweisen. Die Strukturen sind dabei dem Fachmann bekannt. Sie können verbrückende Strukturen oder Käfigstrukturen aufweisen.

Bevorzugt ist R² dabei ausgewählt aus Wasserstoff, C₁-C₁₂-Alkyl, C₁-C₁₂-Alkenyl, C₁-C₁₂-Alkoxy, C₁-C₁₂-Acyl, C₃-C₈-Cycloalkyl oder Phenyl. Besonders bevorzugt wird R² ausgewählt aus C₁-C₆-Alkyl, C₁-C₆-Alkenyl, C₁-C₆-Alkoxy und Phenyl. Des Weiteren bevorzugt wird R² ausgewählt aus Methyl, Ethyl, Propyl, Butyl und Hexyl. Besonders bevorzugt stellt R² Methyl dar. Besonders bevorzugt sind Polymethylsilsesquioxan und Octamethylsilsesquioxan.

Es ist bevorzugt, dass Komponente D, falls vorhanden, in der erfindungsgemäßen Zusammensetzung in Mengen von bis zu 5 Gew.%, bevorzugt 0,5 bis 4 Gew.-%, besonders bevorzugt 1,0 bis 3 Gew.-% eingesetzt wird.

### Komponente E

Ebenso ist es erfindungsgemäß bevorzugt, dass die Zusammensetzung zusätzlich als Komponente E mindestens ein weiteres Additiv ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserern, Umesterungsstabilisatoren, Additive für die Lasermarkierung und Schlagzähmodifikatoren umfasst.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf den erfindungsgemäßen Effekt der guten Flammwidrigkeit auswirken.

Als Thermostabilisatoren eignen sich bevorzugt Triphenylphosphin, Tris(2,4-di-tert-butylphenyl)-phosphit (Irgafos^{®} 168), Tetrakis(2,4-di-tert-butylphenyl)-[1,1-biphenyl]-4,4'-diylbisphosphonit, Octadecyl-3-(3,5-di-tert-butyl-4-hydroxyphenyl)propionat (Irganox^{®} 1076), Bis(2,4-dicumyl-phenyl)pentaerythritoldiphosphit (Doverphos^{®} S-9228 PC), Bis(2,6-di-tert-butyl-4-methylphenyl)-pentaerythritoldiphosphit (ADK STAB PEP-36). Sie werden allein oder im Gemisch (z. B. Irganox^{®} B900 [Gemisch aus Irgafos^{®} 168 und Irganox^{®} 1076 im Verhältnis 4:1] oder Doverphos^{®} S-9228 PC mit Irganox^{®} B900 bzw. Irganox^{®} 1076) eingesetzt.

Als Entformungsmittel kommen insbesondere Pentaerythritoltetrastearat (PETS) bzw. Glycerinmonostearat (GMS) in Frage.

Die UV-Absorber weisen eine möglichst geringe Transmission unterhalb 400 nm und eine möglichst hohe Transmission oberhalb von 400 nm auf. Für den Einsatz in der erfindungsgemäßen Zusammensetzung besonders geeignete UV-Absorber sind Benzotriazole, Triazine, Benzophenone und/oder arylierte Cyanoacrylate.

Besonders geeignete UV-Absorber sind Hydroxy-Benzotriazole, wie 2-(3',5'-Bis(1,1-dimethylbenzyl)-2'-hydroxyphenyl)benzotriazol (Tinuvin^{®} 234, BASF SE, Ludwigshafen), 2-(2'-Hydroxy-5'-(tert.-octyl)phenyl)benzotriazol (Tinuvin^{®} 329, BASF SE, Ludwigshafen), Bis(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)phenol (Tinuvin^{®} 1577, BASF SE, Ludwigshafen), sowie Benzophenone wie 2,4-Dihydroxybenzophenon (Chimasorb^{®} 22, BASF SE, Ludwigshafen) und 2-Hydroxy-4-(octyl-oxy)benzophenon (Chimassorb^{®} 81, BASF SE, Ludwigshafen), 2,2-Bis[[(2-cyano-1-oxo-3,3-diphenyl-2-propenyl)oxy]methyl]-1,3-propandiylester (9CI) (Uvinul^{®} 3030, BASF SE, Ludwigshafen), 2-[2-Hydroxy-4-(2-ethylhexyl)oxy]phenyl-4,6-di(4-phenyl)phenyl-1,3,5-triazine (Tinuvin^{®} 1600, BASF SE, Ludwigshafen), Tetraethyl-2,2'-(1,4-phenylendimethyliden)bismalonat (Hostavin^{®} B-Cap, Clariant AG) oder N-(2-Ethoxyphenyl)-N'-(2-ethylphenyl)ethandiamid (Tinuvin^{®} 312, CAS-Nr. 23949-66-8, BASF SE, Ludwigshafen).

Besonders bevorzugte spezielle UV-Absorber sind Tinuvin^{®} 360, Tinuvin^{®} 329, Tinuvin^{®} 312, Tinuvin^{®} 326 und/oder Tinuvin^{®} 1600, ganz besonders bevorzugt sind Tinuvin^{®} 329, Tinuvin^{®} 326 und/oder Tinuvin^{®} 360.

Es können auch Mischungen der genannten UV-Absorber eingesetzt werden.

Sofern UV-Absorber enthalten sind, enthält die Zusammensetzung bevorzugt UV-Absorber in einer Menge bis 0,8 Gew.-%, bevorzugt 0,05 Gew.-% bis 0,5 Gew.-%, ganz besonders bevorzugt 0,08 Gew.-% bis 0,15 Gew.-%.

Besonders bevorzugt wird bei UV-geschützten Zusammensetzungen Tris(isooctyl)phosphat in Mengen von 0,005 Gew-% bis 0,020 Gew.-% als Verarbeitungshilfsstoff gegen Umesterungsreaktionen (Nebenreaktionen) bei der Compoundierung/Verarbeitung eingesetzt.

Gängige Schlagzähmodifikatoren, wie z.B. Polyethylenwachse oder Kern-Schale-Modifikatoren wie z. B. Silikon-Acylat-Kautschuke, sind dem Fachmann bekannt.

### Komponente F

Für opake und transluzente Zusammensetzungen sind als weitere Komponente F bevorzugt Farbmittel und/oder lichtstreuende Diffusionsadditive enthalten. Übliche lichtstreuende Diffusionsadditive, wie z. B. Polyacrylate oder Copolyacrylate, sind dem Fachmann bekannt. Die Farbmittel sind dem Fachmann ebenfalls bekannt. Sie umfassen bevorzugt sowohl Ruß, Pigmente, insbesondere Titandioxid, und/oder organische Farbmittel. Wenn Titandioxid in der Zusammensetzung enthalten ist, ist es bevorzugt bis zu 15 Gew.-%, ganz besonders bevorzugt bis zu 3 Gew.-% ebenso bevorzugt bis zu 2 Gew.-% bezogen auf die Gesamtzusammensetzung enthalten. Alternativ kann das Titandioxid auch von 3 bis 15 Gew.-%, bevorzugt 7 bis 15 Gew.-% bezogen auf die Gesamtzusammensetzung enthalten sein. Der Fachmann weiß, dass Titandioxid Einfluss auf die Flammwidrigkeit der Zusammensetzung haben kann. Daher sind Farben, welche dadurch erhalten werden, dass sie unter anderem Titandioxid enthalten, für eine Erzielung von mindestens V-0 bei 3 mm, bevorzugt 2,4 mm besonders herausfordernd.

Umfasst die erfindungsgemäße Zusammensetzung die Komponente(n) C, D, E und/oder F, so beziehen sich die angegebenen Mengen jeweils auf die Summe der vorhandenen Komponenten A bis C, D, E und/oder F.

Bevorzugt umfasst die erfindungsgemäße Zusammensetzung die Komponenten A bis E in den folgenden Mengen:
25 bis 99,7 Gew.-% der Komponente A, besonders bevorzugt 55 bis 98,7 Gew.-%, ganz besonders bevorzugt 75 bis 97,7 Gew.-%;
0,1 bis 0,25 Gew.-% der Komponente B, bevorzugt 0,12 bis 0,22 Gew.-%, besonders bevorzugt 0,14 bis 0,20 Gew.-%, ganz besonders bevorzugt 0,16 bis 0,18 Gew-%;
0 bis 70 Gew.-% der Komponente C, besonders bevorzugt bis 40 Gew.-%, ganz besonders bevorzugt 20 Gew.-%;
0 bis 5 Gew.-% der Komponente D, besonders bevorzugt 0,5 bis 4 Gew.-%, ganz besonders bevorzugt 1,0 bis 3 Gew.-%;
0 bis 2 Gew.-% der Komponente E, bevorzugt 0,1 bis 1 Gew.-% E, besonders bevorzugt 0,2 bis 0,8 Gew.-%, ganz besonders bevorzugt 0,3 bis 0,6 Gew.-%;
0 bis 15 Gew-% der Komponente F, bevorzugt 0,01 bis 7 Gew.-%, besonders bevorzugt 0,1 bis 2 Gew.-%.
wobei sich die Gew.-% auf die Summe der Komponenten A bis F beziehen.

Dabei ist es besonders bevorzugt, dass die erfindungsgemäße Zusammensetzung aus den Komponenten A bis F besteht. Dann ergänzen sich die Gewichtsanteile der Komponenten A bis F zu 100 %.

### Beispiele

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 290-340 °C.

### Materialien

A verzweigtes Polycarbonat auf Basis von Bisphenol A und 1,1,1-Tri(4-hydroxyphenyl)ethan (THPE) als Verzweiger (Verzweigungsgrad: 1 mol-%) und p-tert.-Butylphenol (BUP) als Kettenabbrecher mit einer Schmelzevolumenfließrate MVR von 6 cm³/10 min (gemäß ISO 1133:2012-03, bei einer Prüftemperatur 300 °C und 1,2 kg Belastung), maximale Schmelzeviskosität 140 Pa s (350-450 °C, 10 °C/min, 3 rad/s)
B DPS-Salz (KSS-Salz), Gemisch aus Kaliumdiphenylsulfonsulfonat und Dikalium-3,3'-sulfonylbis(benzolsulfonat) im Verhältnis von 75:25 von Arichem LLC USA
C-1 Lineares Polycarbonat auf Basis von Bisphenol A und p-tert.-Butylphenol als Kettenabbrecher mit einer Schmelze-Volumenfließrate MVR (300 °C/1,2 kg) von 9 cm³/10 min (gemäß ISO 1133:2012-03, bei einer Prüftemperatur 300 °C und 1,2 kg Belastung)
C-2 Lineares Polycarbonat auf Basis von Bisphenol A und p-tert.-Butylphenol als Kettenabbrecher mit einer Schmelze-Volumenfließrate MVR (300 °C/1,2 kg) von 19 cm³/10 min (gemäß ISO 1133:2012-03, bei einer Prüftemperatur 300 °C und 1,2 kg Belastung)
D Octaphenylcyclotetrasiloxan (OPCTS) der Fa. Shin-Etsu Co, Ltd. Japan
E-1 Bis(3-(2H-benztriazolyl)-2-hydroxy-5-tert.-octyl)methan, Tinuvin 360 von BASF Ludwigshafen
E-2 DISFLAMOLL TOF, Tris(isooctyl)phosphat der Fa. Lanxess Deutschland
E-3 Octadecyl-3-(3,5-di-tert-butyl-4-hydroxyphenyl)propionat, IRGANOX 1076 von BASF Ludwigshafen
E-4 Pentaerythritoltetrastearat (PETS, Loxiol P 861/3.5 Special) der Fa. Emery Oleochemicals GmbH

**Tabelle 1: Prüfmethoden**

| **Eigenschaft** | **Probenkörperdicke** | **Einheit** | **Norm** |
|---|---|---|---|
| Flammschutz UL94-V | 3,0 mm / 2,4 mm | | UL94 |
| Transmission | 3,0 mm / 2,0 mm | % | ASTM E 1164 |
| Yellowness Index (YI) | 3,0 mm / 2,0 mm | | ASTM E 313 |
| Trübung | 3,0 mm / 2,0 mm | % | ASTM D1003 |

Für die Klassifizierung nach UL94V werden Probekörper der Zusammensetzungen mit den Abmessungen 125 × 13 × *S* (mm)³ mittels Spritzguss bei 280 °C/300 °C Schmelzetemperatur hergestellt. Dabei stellt S die Dicke der Probekörper dar, wie sie in den Tabellen 1 und 2 angegeben ist.

Die UL94-Tests werden mit offener Flamme (Bunsenbrenner) durchgeführt. Sie wirkt bei der UL94V-Prüfung zweimal 10 s auf den Probekörper ein und wird anschließend wieder entfernt. Dabei werden die Brennzeit und auch das Abfallen brennender Teile mit Hilfe eines Wattebausches, welcher sich unter dem Probekörper befindet, bewertet.
- V-2: Verlöschen einer vertikal eingespannten Probe innerhalb von 30 Sekunden. Brennendes Abtropfen von Kunststoffschmelze zulässig.
- V-1: wie V-2, jedoch kein brennendes Abtropfen von Kunststoffschmelze zulässig. Maximal 60 Sekunden Nachglimmen.
- V-0: wie V-1, jedoch Verlöschen der Flamme innerhalb von 10 Sekunden. Maximal 30 Sekunden Nachglimmen.

Für die optischen Messungen werden Probekörper (Plättchen) mit optischer Qualität/Oberfläche in den entsprechenden Dicken mittels Spritzguss bei 280 °C und 300 °C Schmelzetemperatur hergestellt. Von den optischen Probeplättchen der jeweiligen Dicke wurde in Anlehnung an das in ASTM E 1164-12 beschriebene Verfahren Transmissionsspektren gemessen. Daraus wurden die Farbwerte L*, a*, b* im Farbraum CIELAB 1976 nach ASTM E 308-08 für die Lichtart D65 und den 10°-Beobachter berechnet. Des Weiteren wurde die Transmission Ty(D65,10°) =Y(D65,10°) im Farbraum CIE 1931 berechnet. Sie bezieht sich auf die Lichtart D65 und den 10°-Beobachter. Der Yellowness Index YI wird nach ASTM E 313 ebenfalls für die Lichtart D65 und den 10°-Beobachter berechnet.

Die Trübung wurde mittels HazeGard I von Byk nach der Norm ASTM D1003 (Prozedur A) an den gleichen optischen Probeplättchen der jeweiligen Dicke bestimmt.

**Tabelle 2: Zusammensetzung und deren Eigenschaften, Anteile der Komponenten A-E in Gew.-%**

| | 1 | 2 | 3 | 4 | 5 | 6 | 7 |
|---|---|---|---|---|---|---|---|
| A | 98,325 | 79,325 | 79,455 | 58,325 | 30,000 | 77,325 | 57,325 |
| C-1 | | 20,000 | 20,000 | | 68,325 | 20,000 | |
| C-2 | | | | 40,000 | | | 40,000 |
| B | 0,170 | 0,170 | 0,170 | 0,170 | 0,170 | 0,170 | 0,170 |
| E-1 | 0,120 | 0,120 | | 0,120 | 0,120 | 0,120 | 0,120 |
| E-2 | 0,010 | 0,010 | | 0,010 | 0,010 | 0,010 | 0,010 |
| E-3 | 0,025 | 0,025 | 0,025 | 0,025 | 0,025 | 0,025 | 0,025 |
| E-4 | 0,350 | 0,350 | 0,350 | 0,350 | 0,350 | 0,350 | 0,350 |
| D | 1,000 | | | 1,000 | 1,000 | 2,000 | 2,000 |
| UL94-V | | V-0 | V-0 | V-0 | V-0 | | V-0 |
| 3 mm | | | | | | | |
| UL94-V | V-0 | | | | | V-0 | V-0 |
| 2,4 mm | | | | | | | |
| Transmission | 89,3 | 89,1 | | 89,2 | 89,3 | 89,4 | 89,3 |
| 3 mm [%] | | | | | | | |
| Transmission | 89,6 | 89,5 | | 89,5 | 89,5 | 89,6 | 89,6 |
| 2 mm [%] | | | | | | | |
| YI | 2,9 | | | 2,5 | | | 2,6 |
| 3 mm, 280 °C | | | | | | | |
| YI | 2,8 | 2,6 | | 2,8 | 2,4 | 2,6 | 2,5 |
| 3 mm, 300 °C | | | | | | | |
| YI | 2,2 | | | 1,9 | | | 1,9 |
| 2 mm, 280 °C | | | | | | | |
| YI | 2,1 | 2,0 | | 2,1 | 1,9 | 2,0 | 1,9 |
| 2 mm, 300 °C | | | | | | | |
| Trübung | 0,84 | | | 1,1 | | | 0,9 |
| 3 mm, 280 °C [%] | | | | | | | |
| Trübung | 0,76 | 1,2 | | 1,1 | 0,9 | 0,6 | 1,1 |
| 3 mm, 300 °C [%] | | | | | | | |
| Trübung | 0,95 | | | 1,1 | | | 0,6 |
| 2 mm, 280 °C [%] | | | | | | | |
| Trübung | 0,76 | 1,1 | | 1,1 | 0,5 | 0,5 | 1,0 |
| 2 mm, 300 °C [%] | | | | | | | |

Die Daten aus Tabelle 2 zeigen, dass mit den erfindungsgemäßen Zusammensetzungen eine Flammwidrigkeit nach UL94 von V-0 bei 3 mm bzw. 2,4 mm erreicht wird, ohne dass hierfür die Zugabe von fluorhaltigen Flammschutzmitteln und -synergisten notwendig ist. Darüber hinaus zeichnen sich die erfinderischen Zusammensetzungen durch eine hohe optische Güte mit hoher Transparenz sowie geringem YI und geringer Trübung aus.

## Patentansprüche

1. Zusammensetzung enthaltend
(A) Polycarbonat mit einem Verzweigungsgrad von 0,8 bis 1,5 mol-%,
(B) 0,10 bis 0,25 Gew.-% einer Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen, wobei sich die Gew.-% auf die gesamte Zusammensetzung beziehen.

2. Zusammensetzung nach Anspruch 1, **dadurch gekennzeichnet, dass** Komponente B ein aromatisches Sulfonsäurederivat, bevorzugt ein halogenfreies aromatisches Sulfonsäurederivat ist.

3. Zusammensetzung nach einem der Ansprüchen 1 bis 2, **dadurch gekennzeichnet, dass** Komponente B ausgewählt ist aus der Gruppe bestehend aus Kaliumdiphenylsulfonsulfonat, Dikalium-3,3'-sulfonylbis(benzolsulfonat) und einer Mischung daraus.

4. Zusammensetzung nach einem der Ansprüche 1 bis 3 enthaltend 0,12 bis 0,22 Gew.-%, bevorzugt 0,14 bis 0,20 Gew.-%, besonders bevorzugt 0,16 bis 0,18 Gew.-% der Komponente B.

5. Zusammensetzung nach einem der Ansprüchen 1 bis 4 enthaltend 25 bis 99,7 Gew.-%, bevorzugt 55 bis 98,7 Gew.-%, besonders bevorzugt 75 bis 97,7 Gew.-% der Komponente A.

6. Zusammensetzung nach einem der Ansprüchen 1 bis 5, **dadurch gekennzeichnet, dass** Komponente A einen Kettenabbrecher ausgewählt aus Phenol und p-tert-Butylphenol, bevorzugt p-tert-Butylphenol enthält.

7. Zusammensetzung nach einem der Ansprüche 1 bis 6 zusätzlich enthaltend (C) bis zu 70 Gew.%, bevorzugt bis zu 40 Gew.-%, besonders bevorzugt bis zu 20 Gew.-% eines lineares Polycarbonats.

8. Zusammensetzung nach einem der Ansprüche 1 bis 7 zusätzlich enthaltend (D) bis zu 5 Gew.%, bevorzugt 0,5 bis 4 Gew.-%, besonders bevorzugt 1,0 bis 3 Gew.-% eines cyclischen Siloxans der Formel (R¹₂SiO)_{y} und /oder eines Siloxans, welches eine trifunktionelle Siloxaneinheit der Formel R²SiO_{3/2} umfasst,
worin R¹ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise
worin R² jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

9. Zusammensetzung nach einem der Ansprüche 1 bis 8, **dadurch gekennzeichnet dass** sie eine Transparenz von 85% bis 98%, bevorzugt von 87% bis 95%, besonders bevorzugt von 88% bis 92% gemessen nach ASTM E 1164 bei einer Dicke von 3 mm aufweist.

10. Zusammensetzung nach einem der Ansprüche 1 bis 8, **dadurch gekennzeichnet, dass** sie zusätzlich 0 bis 2 Gew.-%, bevorzugt 0,1 bis 1 Gew.-%, besonders bevorzugt 0,2 bis 0,8 Gew.-%, ganz besonders bevorzugt 0,3 bis 0,6 Gew.-% mindestens ein weiteres Additiv (E) ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserern, Umesterungsstabilisatoren, Additiven für die Lasermarkierung und Schlagzähmodifikatoren enthält.

11. Zusammensetzung nach einem der Ansprüche 1 bis 10, **dadurch gekennzeichnet, dass** sie eine zusätzlich als Komponente F lichtstreuende Diffusionsadditive und Farbmittel enthält.

12. Zusammensetzung nach einem der Ansprüche 1 bis 11, **dadurch gekennzeichnet, dass** sie weniger als 0,1 Gew.-%, bevorzugt weniger 0,01 Gew.-%, besonders bevorzugt dass sie kein PTFE enthält.

13. Zusammensetzung nach einem der Ansprüche 1 bis 12, **dadurch gekennzeichnet, dass** sie weniger als 1 Gew.-%, bevorzugt weniger als 0,1 Gew.-%, besonders bevorzugt weniger 0,01 Gew.-%, ganz besonders bevorzugt dass sie kein Polysiloxan-Polycarbonat-Blockcokondensat enthält.

14. Zusammensetzung nach einem der Ansprüche 1 bis 13, **dadurch gekennzeichnet, dass** sie aus den Komponenten A bis F besteht.

15. Formkörper enthaltend eine Zusammensetzung gemäß einem der vorhergehenden Ansprüche.
